# FASCICULE DE BREVET EUROPEEN

(11) **EP 0 568 449 B1**
(45) Date de publication et mention de la délivrance du brevet: **10.06.1998**
(21) Numéro de dépôt: 93401096.8
(22) Date de dépôt: 27.04.1993
(51) Int. Cl.: H04B 10/14

(54) **Dispositif de transduction optoélectronique pour équipement de terminaison de liaison optique, et application à divers types de liaisons optiques**
Optoelektronischer Umwandler für optisches Endgerät und Anwendung in verschiedenen optischen Verbindungen
Optoelectronic converter for optical terminal equipment and its application in various types of optical links

(30) Priorité: 29.04.1992 FR 9205299
(43) Date de publication de la demande: 03.11.1993
(73) Titulaire: ALCATEL ALSTHOM COMPAGNIE GENERALE D'ELECTRICITE, 75008 Paris (FR)
(72) Inventeur: Marcel, Francois, F-91400 Orsay (FR); Eldering, Charles, F-28045 Madrid (FR); Allaire, Serge, F-27170 Beaumont-le-Roger (FR)
(74) Mandataire: El Manouni, Josiane

(56) Documents cités:
- EP-A- 187 198
- WO-A-91/07677
- US-A- 5 016 966
- PATENT ABSTRACTS OF JAPAN vol. 15, no. 363 (P-1251)1991 & JP-A-3 141 305 ( HITACHI CABLE )

## Description

La présente invention concerne d'une manière générale les transmissions optiques. Elle concerne plus particulièrement un dispositif de transduction optoélectronique pour équipement de terminaison de liaison optique. Ledit équipement de terminaison peut être un équipement d'extrémité de liaison ou un équipement dit de ligne (tel que régénérateur ou répéteur) prévu sur cette liaison.

Les interfaces prévues dans les équipements de terminaison de liaisons optiques pour contenir les moyens de transduction optoélectronique d'émission assurant la transformation de signaux électriques en signaux optiques et les moyens de transduction optoélectronique de réception assurant la transformation de signaux optiques en signaux électriques, nécessaires pour permettre une transmission d'information sur ce type de liaison, comportent actuellement, pour chaque application, c'est-à-dire pour chaque type de liaison (par exemple, s'il s'agit d'une liaison optique bidirectionnelle, pour une liaison du type comportant un seul moyen de transmission, bidirectionnel, ou deux moyens de transmission, unidirectionnels) un dispositif de transduction optoélectronique particulier, propre à l'application considérée.

Le document EP 0 187 198 décrit un tel dispositif de transduction optoélectronique, intégré dans un matériau semi-conducteur, comportant :
- un accès de raccordement ;
- des premiers et des seconds moyens de raccordement ;
- et des moyens pour aiguiller un faisceau lumineux, définissant deux voies de transmission optique respectivement entre l'accès de raccordement, d'une part, et les premiers et seconds moyens de raccordement, d'autre part.

Ce dispositif connu présente l'inconvénient de ne pas pouvoir être modifié, pour être utilisé dans d'autres applications, par exemple celles nécessitant un deuxième accès et des seconds moyens pour aiguiller. Chaque nouvelle application impose la fabrication d'un nouveau type de dispositif.

La présente invention a pour objet un dispositif de transduction optoélectronique qui soit utilisable dans un grand nombre d'applications, et qui rende par conséquent la conception et la réalisation de ces interfaces plus économique.

La présente invention a ainsi pour objet un dispositif de transduction optoélectronique pour équipement de terminaison de liaison optique, comportant, suivant un mode de réalisation de l'invention:
- un accès de raccordement pour ladite liaison optique, dit premier accès de raccordement,
- deux supports, dits premier et deuxième support, aptes à supporter des moyens de transduction optoélectronique dits respectivement premier et deuxième moyen de transduction optoélectronique,
- un support, dit troisième support, apte à supporter un moyen d'aiguillage de faisceau, dit premier moyen d'aiguillage de faisceau,
ces éléments étant localisés dans une même structure et étant disposés les uns par rapport aux autres de façon à autoriser une transmission optique entre ledit premier accès de raccordement et ledit moyen d'aiguillage de faisceau d'une part, et entre chacun desdits moyens de transduction optoélectronique et ledit premier moyen d'aiguillage de faisceau, d'autre part, définissant ainsi à l'intérieur de ladite structure des voies de transmission optique dites respectivement première, deuxième, et troisième voie, et ce dispositif étant essentiellement caractérisé en ce qu'il comporte en outre, suivant ce mode de réalisation de l'invention, un autre accès de raccordement pour ladite liaison optique, dit deuxième accès de raccordement, et un autre support, dit cinquième support, apte à supporter un autre moyen d'aiguillage de faisceau, dit deuxième moyen d'aiguillage de faisceau, ces deux derniers éléments étant également localisés dans ladite structure et étant disposés l'un par rapport à l'autre et par rapport aux éléments correspondant audit premier mode de réalisation de façon à autoriser une transmission optique entre ledit deuxième moyen d'aiguillage de faisceau et ledit deuxième accès de raccordement, d'une part, et entre ledit deuxième moyen d'aiguillage de faisceau et ledit premier moyen d'aiguillage de faisceau, d'autre part, définissant ainsi à l'intérieur de ladite structure deux autres voies de transmission optique, dites respectivement cinquième et sixième voie.

Suivant un autre mode de réalisation de l'invention, ce dispositif comporte en outre:
- un autre support, dit quatrième support, apte à supporter un autre moyen de transduction optoélectronique, dit troisième troyen de transduction optoélectronique,
cet autre élément étant également localisé dans ladite structure et étant disposé, par rapport aux éléments correspondant au mode de réalisation mentionné précédemment, de façon à autoriser en outre une transmission optique entre ledit deuxième moyen d'aiguillage de faisceau et ledit troisième moyen de transduction optoélectronique, définissant ainsi à l'intérieur de ladite structure une autre voie de transmission optique, dite septième voie.

La présente invention a également pour objet l'application de tels dispositifs à divers types de liaisons optiques.

D'autres objets et caractéristiques de la présente invention apparaîtront à la lecture de la description suivante d'exemples de réalisation, faite en relation avec les dessins ci-annexés dans lesquels :
- la figure 1 est un schéma d'un dispositif de transduction optoélectronique pour équipement de terminaison de liaison optique, destiné à faciliter la présentation des divers modes de réalisation de la présente invention,
- les figures 2, 3, et 4 montrent respectivement un premier, un deuxième et un troisième mode de réalisation d'un dispositif de transduction optoélectronique suivant l'invention,
- la figure 5 montre l'application d'un dispositif suivant la figure 1, à un équipement de terminaison de liaison optique bidirectionnelle comportant un seul moyen de transmission, bidirectionnel,
- les figures 6, 7 et 8 montrent respectivement l'application d'un dispositif suivant le premier, le deuxième, et le troisième mode de réalisation, à un équipement de terminaison de liaison optique bidirectionnelle comportant un seul moyen de transmission, bidirectionnel,
- les figures 9 et 10 montrent respectivement l'application d'un dispositif suivant le premier et le deuxième mode de réalisation, à un équipement de terminaison de liaison optique bidirectionnelle comportant deux moyens de transmission, unidirectionnels, affectés respectivement à l'émission et à la réception,
- les figures 11 et 12 montrent deux applications possibles d'un dispositif suivant ledit troisième mode de réalisation, à un équipement de terminaison de liaison optique bidirectionnelle comportant deux moyens de transmission, unidirectionnels, affectés respectivement à l'émission et à la réception,
- les figures 13 et 14 montrent respectivement l'application d'un dispositif suivant le premier et le troisième mode de réalisation, à un équipement de terminaison de liaison optique comportant un moyen de transmission bidirectionnel et un moyen de transmission unidirectionnel,
- la figure 15 montre l'application d'un dispositif suivant le premier mode de réalisation, à un équipement de terminaison de liaison optique comportant deux moyens de transmission unidirectionnels dont l'un est un moyen de transmission unidirectionnel à multiplexage en longueur d'onde,
- les figures 16 et 17 montrent respectivement deux applications d'un dispositif suivant le troisième mode de réalisation, à un équipement de terminaison de liaison optique comportant deux moyens de transmission unidirectionnels dont l'un est un moyen de transmission unidirectionnel à multiplexage en longueur d'onde.

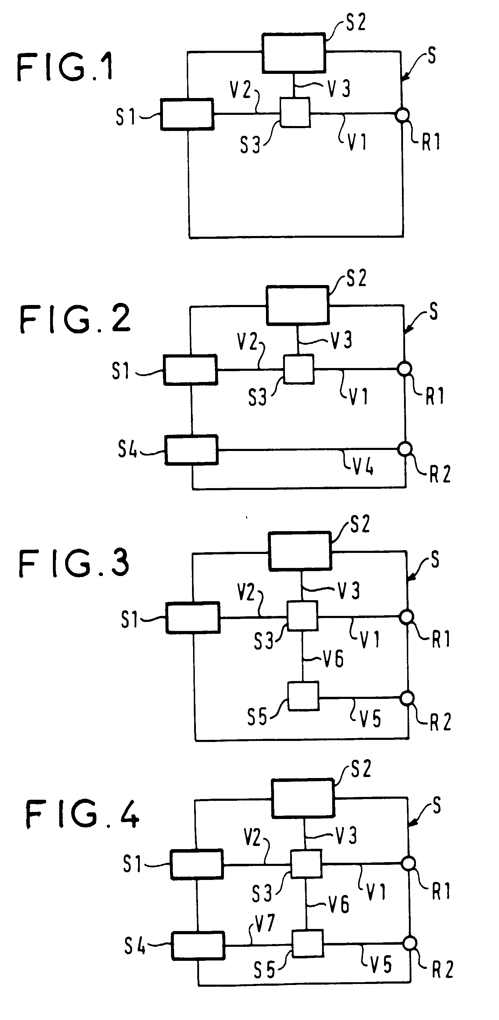

Le dispositif de transduction optoélectronique représenté sur la figure 1 comporte :
- un accès de raccordement, R1, pour ladite liaison optique, dit premier accès de raccordement,
- deux supports, dits premier et deuxième support, S1, S2, aptes à supporter des moyens de transduction optoélectronique, dits respectivement premier et deuxième moyen de transduction optoélectronique,
- un support, dit troisième support, S3, apte à supporter un moyen d'aiguillage de faisceau, dit premier moyen d'aiguillage de faisceau,
ces éléments étant localisés dans une même structure, S, et étant disposés les uns par rapport aux autres de façon à autoriser une transmission optique entre ledit premier accès de raccordement et ledit premier moyen d'aiguillage de faisceau, d'une part, et entre chacun desdits moyens de transduction optoélectronique et ledit premier moyen d'aiguillage de faisceau d'autre part, définissant ainsi à l'intérieur de ladite structure S des voies de transmission optique dites respectivement première, deuxième, et troisième voie V1, V2, V3.

Le dispositif de transduction optoélectronique représenté sur la figure 2 comporte en outre un autre accès de raccordement pour ladite liaison optique, dit deuxième accès de raccordement, R2, et un autre support, dit quatrième support, S4, apte à supporter un moyen de transduction optoélectronique, dit troisième moyen de transduction optoélectronique, ces deux derniers éléments étant également localisés dans ladite structure S et étant disposés l'un par rapport à l'autre et par rapport aux éléments du schéma de la figure 1, de façon à autoriser une transmission optique entre ledit troisième moyen de transduction optoélectronique et ledit second accès de raccordement, définissant ainsi à l'intérieur de ladite structure une autre voie de transmission optique, dite quatrième voie, V4.

Le dispositif de transduction optoélectronique représenté sur la figure 3 comporte en outre, par rapport à celui représenté sur la figure 1, un autre accès de raccordement pour ladite liaison optique, dit deuxième accès de raccordement, R2, et un autre support, dit cinquième support, S5, apte à supporter un autre moyen d'aiguillage de faisceau, dit deuxième moyen d'aiguillage de faisceau, ces deux derniers éléments étant également localisés dans ladite structure S et étant disposés l'un par rapport à l'autre et par rapport aux éléments du schéma de la figure 1, de façon à autoriser une transmission optique entre ledit deuxième moyen d'aiguillage de faisceau et ledit deuxième accès de raccordement, d'une part, et entre ledit deuxième moyen d'aiguillage de faisceau et ledit premier moyen d'aiguillage de faisceau, d'autre part, définissant ainsi à l'intérieur de ladite structure S, deux autres voies de transmission optique, dites respectivement cinquième et sixième voie, V5, V6.

Le dispositif de transduction optoélectronique représenté sur la figure 4 comporte en outre, par rapport à celui représenté sur la figure 1 :
- un autre accès de raccordement pour ladite liaison optique, dit deuxième accès de raccordement, R2,
- un autre support, dit quatrième support, S4, apte à supporter un autre moyen de transduction optoélectronique, dit troisième moyen de transduction optoélectronique,
- un autre support, dit cinquième support, S5, apte à supporter un autre moyen d'aiguillage de faisceau, dit deuxième moyen d'aiguillage de faisceau,
ces autres éléments étant également localisés dans ladite structure, S, et étant disposés l'un par rapport à l'autre et par rapport aux éléments du schéma de la figure 1 de façon à autoriser une transmission optique entre ledit deuxième accès de raccordement et ledit deuxième moyen d'aiguillage de faisceau, entre ledit deuxième moyen d'aiguillage de faisceau et ledit premier moyen d'aiguillage de faisceau, et entre ledit deuxième moyen d'aiguillage de faisceau et ledit troisième moyen de transduction optoélectronique, définissant ainsi à l'intérieur de ladite structure trois autres voies de transmission optique, dites respectivement cinquième, sixième et septième voie, V5, V6, V7.

Ladite structure S peut être par exemple un bloc (vu en coupe sur les figures 1, 2, 3 et 4) réalisé dans une matière solide, par exemple synthétique, dans laquelle sont prévues des cavités aux emplacements des différents supports et éléments aptes à être supportés par ces supports, ainsi qu'aux emplacements des différentes voies de transmission et accès de raccordement.

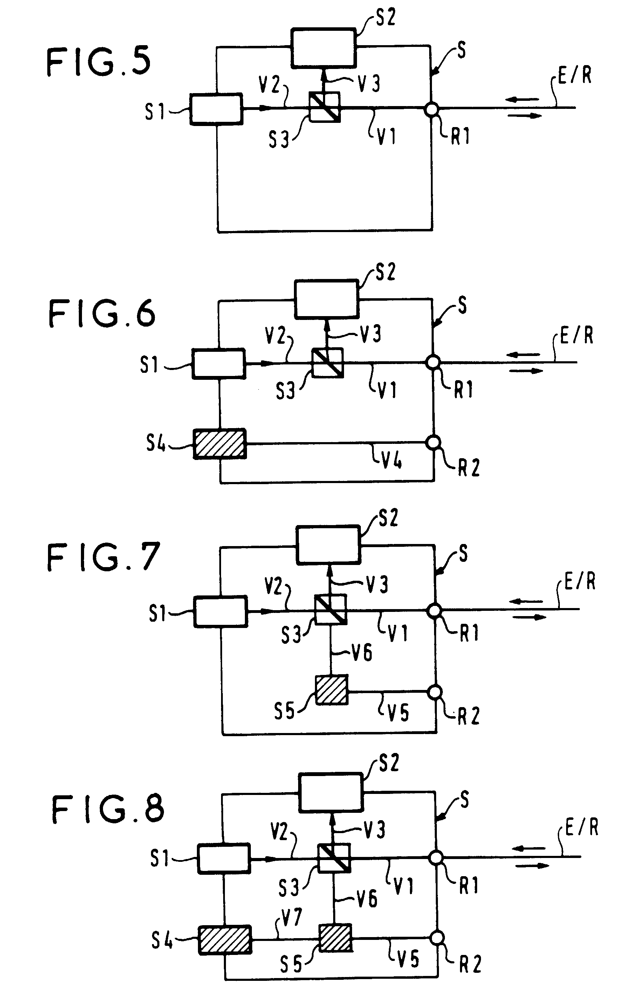

L'application d'un dispositif du type illustré sur la figure 1 à un équipement de terminaison d'une liaison optique bidirectionnelle comportant un seul moyen de transmission, bidirectionnel, E/R, est illustrée sur la figure 5. Suivant cette application :
- ledit moyen de transmission bidirectionnel E/R est raccordé audit premier accès de raccordement R1,
- ledit troisième support S3 supporte un moyen d'aiguillage de faisceau qui est un moyen de séparation de faisceaux émission et réception,
- lesdits premier et deuxième support S1, S2 supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission (ce qui correspond à titre d'exemple au cas illustré sur cette figure), ou inversement.

L'application d'un dispositif du type illustré sur la figure 2, à un équipement de terminaison d'une liaison optique bidirectionnelle comportant un seul moyen de transmission, bidirectionnel, E/R, est illustrée sur la figure 6. Suivant cette application :
- ledit moyen de transmission bidirectionnel E/R est raccordé audit premier accès de raccordement R1,
- ledit troisième support S3 supporte un moyen d'aiguillage de faisceau qui est un moyen de séparation de faisceaux émission et réception,
- lesdits premier et deuxième support S1, S2 supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission (ce qui correspond à titre d'exemple au cas illustré sur cette figure), ou inversement,
- ledit quatrième support S4 ne supporte aucun élément (ce qui est symbolisé sur la figure par des hachures), et ledit deuxième accès de raccordement R2 n'est raccordé à aucun moyen de transmission optique.

L'application d'un dispositif du type illustré sur la figure 3, à un équipement de terminaison d'une liaison optique bidirectionnelle comportant un seul moyen de transmission, bidirectionnel, E/R, est illustrée sur la figure 7. Suivant cette application :
- ledit moyen de transmission bidirectionnel E/R est raccordé audit premier accès de raccordement R1,
- ledit troisième support S3 supporte un moyen d'aiguillage de faisceau qui est un moyen de séparation de faisceaux émission et réception,
- lesdits premier et deuxième support S1, S2 supportent respectivement un moyen de transduction optoélectronique d'émisssion et un moyen de transduction optoélectronique de réception, ou inversement, suivant que ledit faisceau d'émission emprunte ladite deuxième voie de transmission et ledit faisceau de réception ladite troisième voie de transmission (ce qui correspond à titre d'exemple au cas illustré sur cette figure), ou inversement,
- ledit cinquième support S5 ne supporte aucun élément (ce qui est symbolisé sur la figure par des hachures) et ledit deuxième accès de raccordement R2 n'est raccordé à aucun moyen de transmission optique.

L'application d'un dispositif du type illustré sur la figure 4, à un équipement de terminaison d'une liaison optique bidirectionnelle comportant un seul moyen de transmission, bidirectionnel, E/R, est illustrée sur la figure 8. Suivant cette application :
- ledit moyen de transmission bidirectionnel E/R est raccordé audit premier accès de raccordement R1,
- ledit troisième support S3 supporte un moyen d'aiguillage de faisceau qui est un moyen de séparation de faisceaux émission et réception,
- lesdits premier et deuxième support S1, S2 supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission (ce qui correspondant à titre d'exemple au cas illustré sur cette figure), ou inversement,
- ledit quatrième support S4 et ledit cinquième support S5 ne surpportent aucun élément (ce qui est symbolisé sur cette figure par des hachures), et ledit deuxième accès de raccordement R2 n'est raccordé à aucun moyen de transmission optique.

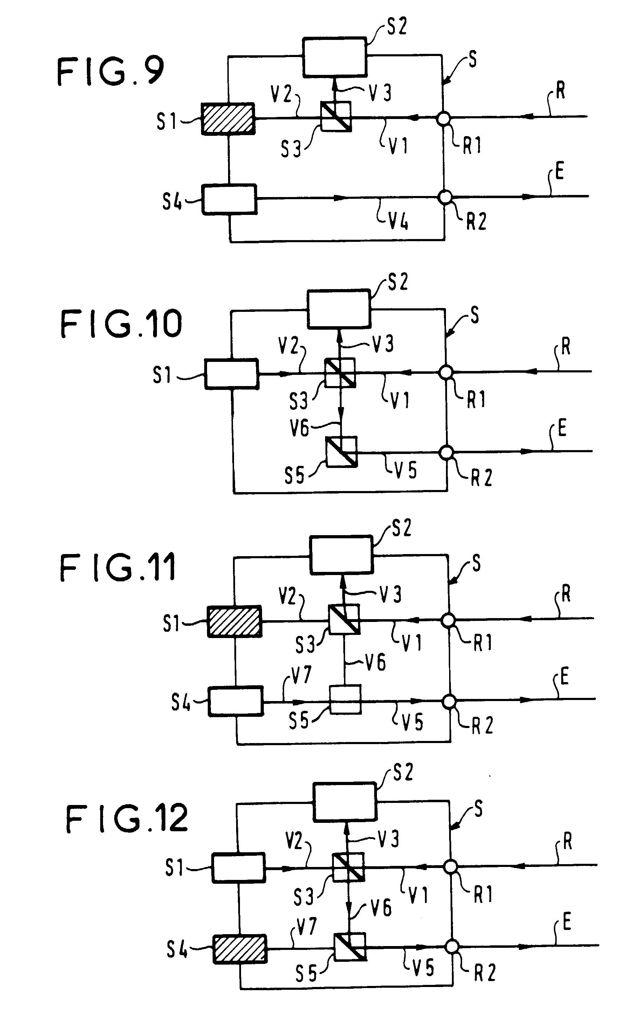

L'application d'un dispositif du type illustré sur la figure 2, à un équipement de terminaison d'une liaison optique bidirectionnelle comportant deux moyens de transmission unidirectionnels, E, R, affectés respectivement à l'émission et à la réception, est illustrée sur la figure 9. Suivant cette application:
- lesdits moyens de transmission unidirectionnels sont raccordés l'un audit premier accès de raccordement R1 et l'autre audit deuxième accès de raccordement R2,
- ledit troisième support S3 supporte un moyen d'aiguillage de faisceau qui est un moyen de déviation de faisceau de la première voie vers la troisième voie, ou inversement, suivant que ledit moyen de transmission qui est affecté à la réception, R, est raccordé au premier accès de raccordement R1, et ledit moyen de transmission qui est affecté à l'émission, E, est raccordé au deuxième accès de raccordement R2 (ce qui correspond à titre d'exemple au cas illustré sur cette figure) ou inversement,
- ledit quatrième support S4 supporte un moyen de transduction optoélectronique, d'émission ou de réception suivant que ledit moyen de transmission qui est affecté à l'émission E est raccordé au deuxième accès de raccordement R2 et ledit moyen de transmission qui est affecté à la réception R est raccordé au premier accès de raccordement R1 (ce qui correspond à titre d'exemple au cas illustré sur cette figure) ou inversement,
- l'un desdits premier et deuxième support supporte un moyen de transduction optoélectronique, de réception ou d'émission suivant que ledit moyen de transmission qui est affecté à la réception, R, est raccordé au premier accès de raccordement R1 et ledit moyen de transmission qui est affecté à l'émission, E, est raccordé au deuxième accès de raccordement R2 (ce qui correspond à titre d'exemple au cas illustré sur cette figure) l'autre desdits premier et deuxième support ne supportant alors aucun élément (ce qui est symbolisé sur cette figure par des hachures).

L'application d'un dispositif du type illustré sur la figure 3, à un équipement de terminaison d'une liaison optique bidirectionnelle comportant deux moyens de transmission, unidirectionnels, E, R, affectés respectivement à l'émission et à la réception, est illustrée sur la figure 10. Suivant cette application :
- lesdits moyens de transmission unidirectionnels sont raccordés l'un audit premier accès de raccordement R1 et l'autre audit deuxième accès de raccordement R2,
- ledit troisième support S3 supporte un moyen d'aiguillage de faisceau qui est un moyen de déviation de faisceau d'une part de ladite première voie V1 vers ladite troisième voie V3 ou inversement, suivant que ledit moyen de transmission unidirectionnel qui est affecté à la réception R est raccordé audit premier accès de raccordement R1 et ledit moyen de transmission unidirectionnel qui est affecté à l'émission E est raccordé audit deuxième accès de raccordement R2 (ce qui correspond à titre d'exemple au cas illustré sur cette figure), et d'autre part de ladite deuxième voie V2 vers ladite sixième voie V6, ou inversement, suivant que ledit moyen de transmission unidirectionnel qui est affecté à la réception R est raccordé audit premier accès de raccordement R1 et ledit moyen de transmission unidirectionnel qui est affecté à l'émission E est raccordé audit deuxième accès de raccordement R2 (ce qui correspond à titre d'exemple au cas illustré sur cette figure), ou inversement,
- ledit cinquième support S5 supporte un moyen d'aiguillage de faisceau qui est un moyen de déviation de faisceau de ladite sixième voie V6 vers ladite cinquième voie V5, ou inversement, suivant que ledit moyen de transmission unidirectionnel qui est affecté à la réception R est raccordé audit premier accès de raccordement et ledit moyen de transmission unidirectionnel qui est affecté à l'émission E est raccordé audit deuxième accès de raccordement R2 (ce qui correspond à titre d'exemple au cas illustré sur cette figure) ou inversement,
- lesdits premier et deuxième support S1, S2 supportent respectivement un moyen de transduction optoélectronique d'émission et un moyen de transduction optoélectronique de réception, ou inversement, suivant que le moyen de transmission qui est affecté à l'émission E est raccordé au deuxième accès de raccordement R2, et le moyen de transmission qui est affecté à la réception R est raccordé au premier accès de raccordement R1, (ce qui correspond à titre d'exemple au cas illustré sur cette figure) ou inversement.

Une première application d'un dispositif du type illustré sur la figure 4, à un équipement de terminaison d'une liaison optique bidirectionnelle comportant deux moyens de transmission, unidirectionnels, E, R, affectés respectivement à l'émission et à la réception, est illustrée sur la figure 11. Suivant cette application :
- lesdits moyens de transmission unidirectionnels E, R sont raccordés l'un audit premier accès de raccordement R1 et l'autre audit deuxième accès de raccordement R2,
- ledit troisième support S3 supporte un moyen d'aiguillage de faisceau qui est un moyen de déviation de faisceau de la première voie V1 vers la troisième voie V3, ou inversement, suivant que ledit moyen de transmission qui est affecté à la réception R est raccordé audit premier accès de raccordement R1, et ledit moyen de transmission qui est affecté à l'émission E est raccordé audit deuxième accès de raccordement R2 (ce qui correspond à titre d'exemple au cas illustré sur cette figure), ou inversement,
- ledit quatrième support S4 supporte un moyen de transduction optoélectronique, d'émission ou de réception suivant que ledit moyen de transmission qui est affecté à l'émission E est raccordé au deuxième accès de raccordement R2, et ledit moyen de transmission qui est affecté à la réception R est raccordé audit premier accès de raccordement R1 (ce qui correspond à titre d'exemple au cas illustré sur cette figure) ou inversement,
- l'un desdits premier et deuxième support supporte un moyen de transduction optoélectronique, de réception ou d'émission suivant que ledit moyen de transmission qui est affecté à la réception R est raccordé au premier accès de raccordement R1 et ledit moyen de transmission qui est affecté à l'émission E est raccordé au deuxième accès de raccordement R2 (ce qui correspond à titre d'exemple au cas illustré sur cette figure) ou inversement, l'autre desdits premier et deuxième support ne supportant alors aucun élément,
- ledit cinquième support ne supporte aucun élément et permet, comme symbolisé sur la figure, auxdites cinquième et septième voie d'être reliées l'une à l'autre.

Une deuxième application d'un dispositif du type illustré sur la figure 4, à un équipement de terminaison d'une liaison optique bidirectionnelle comportant deux moyens de transmission unidirectionnels, E, R, affectés respectivement à l'émission et à la réception, est illustrée sur la figure 12. Suivant cette application :
- lesdits moyens de transmission unidirectionnels E, R sont raccordés l'un audit premier accès de raccordement R1 et l'autre audit deuxième accès de raccordement R2,
- ledit troisième support S3 supporte un moyen d'aiguillage de faisceau qui est un moyen de déviation de faisceau d'une part de ladite première voie Vl vers ladite troisième voie V3, ou inversement, suivant que ledit moyen de transmission unidirectionnel qui est affecté à la réception est raccordé audit premier accès de raccordement et ledit moyen de transmission qui est affecté à l'émission est raccordé audit deuxième accès de raccordement (ce qui correspond à titre d'exemple au cas illustré sur cette figure), ou inversement, et d'autre part de ladite deuxième voie vers ladite sixième voie, ou inversement, suivant que ledit moyen de transmission unidirectionnel qui est affecté à la réception est raccordé audit premier accès de raccordement et ledit moyen de transmission qui est affecté à l'émission est raccordé audit deuxième accès de raccordement (ce qui correspond à titre d'exemple au cas illustré sur cette figure), ou inversement,
- ledit cinquième support S5 supporte un moyen d'aiguillage de faisceau qui est un moyen de déviation de faisceau de ladite sixième voie vers ladite cinquième voie, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit deuxième accès de raccordement (ce qui correspond à titre d'exemple au cas illustré sur cette figure), ou inversement,
- lesdits premier et deuxième support S1, S2 supportent respectivement un moyen de transduction optoélectronique d'émission et un moyen de transduction optoélectronique de réception, ou inversement, suivant que le moyen de transmission qui est affecté à la réception est raccordé au premier accès de raccordement et le moyen de transmission qui est affecté à l'émission est raccordé au deuxième accès de raccordement (ce qui correspond à titre d'exemple au cas illustré sur cette figure), ou inversement,
- ledit quatrième support S4 ne supporte aucun élément ce qui est symbolisé sur la figure par des hachures.

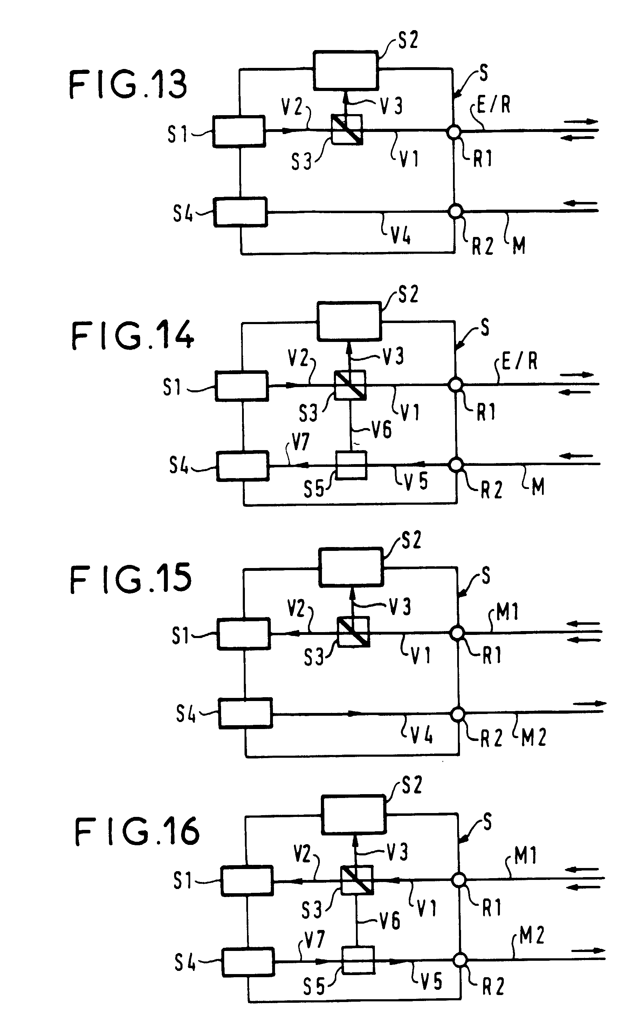

L'application d'un dispositif du type illustré sur la figure 2, à un équipement de terminaison de liaison optique comportant un moyen de transmission optique bidirectionnel, E/R, et un moyen de transmission optique unidirectionnel, M, est illustrée sur la figure 13. Suivant cette application:
- ledit moyen de transmission optique bidirectionnel E/R est raccordé au premier accès de raccordement R1,
- ledit moyen de transmission optique unidirectionnel M est raccordé au second accès de raccordement R2,
- ledit troisième support S3 supporte un moyen d'aiguillage de faisceau qui est un moyen de séparation de faisceaux d'émission et de réception
- lesdits premier et deuxième support S1, S2 supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission, ou inversement,
- ledit quatrième support S4 supporte un moyen de transduction optoélectronique, d'émission ou de réception, suivant que ledit équipement de terminaison est un équipement de terminaison en émission ou en réception pour ledit moyen de transmission optique unidirectionnel M (ce dernier cas correspondant à titre d'exemple au cas illustré sur cette figure).

L'application d'un dispositif du type illustré sur la figure 4, à un équipement de terminison de liaison optique comportant un moyen de transmission optique bidirectionnel, E/R, et un moyen de transmission optique unidirectionnel, M, est illustrée sur la figure 14. Suivant cette application :
- ledit moyen de transmission optique bidirectionnel E/R est raccordé au premier accès de raccordement R1,
- ledit moyen de transmission optique unidirectionnel M est raccordé au second accès de raccordement R2,
- ledit troisième support S3 supporte un moyen d'aiguillage de faisceau qui est un moyen de séparation de faisceaux d'émission et de réception,
- lesdits premier et deuxième support S1, S2 supportent respectivement un moyen de transduction optoélectronique, d'émission et un moyen de transduction optoélectronique de réception, ou inversement, suivant que ledit faisceau d'émission emprunte ladite deuxième voie de transmission et ledit faisceau de réception ladite troisième voie de transmission, ou inversement,
- ledit quatrième support S4 supporte un moyen de transduction optoélectronique, d'émission ou de réception suivant que ledit équipement de terminaison est un équipement de terminaison en émission ou en réception pour ledit moyen de transmission optique unidirectionnel M (ce dernier cas correspondant à titre d'exemple au cas illustré sur cette figure),
- ledit cinquième support S5 ne supporte aucun élément et permet, comme symbolisé sur la figure, auxdites cinquième et septième voie d'être reliées l'une à l'autre.

L'application d'un dispositif du type illustré sur la figure 2, à un équipement de terminaison de liaison optique comportant deux moyens de transmission optique unidirectionnels, M1, M2 dont l'un M1 est un moyen de transmission unidirectionnel à multiplexage en longueurs d'onde, est illustrée sur la figure 15. Suivant cette application :
- ledit moyen de transmission unidirectionnel à multiplexage en longueur d'onde M1 est raccordé audit premier accès de raccordement R1, l'autre moyen de transmission unidirectionnel M2 étant raccordé audit second accès de raccordement R2,
- ledit troisième support S3 supporte un moyen d'aiguillage de faisceau qui est un moyen de séparation de faisceaux en fonction de leur longueur d'onde, de ladite première voie vers ladite troisième voie, d'une part, et de ladite première voie vers ladite deuxième voie, d'autre part, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit deuxième accès de raccordement (ce qui correspond à titre d'exemple au cas illustré sur cette figure), ou inversement; dans ce dernier cas le moyen d'aiguillage de faisceau est un moyen de combinaison de faisceaux,
- lesdits premier et deuxième support S1, S2 supportent respectivement deux mode transduction optoélectronique d'émission fonctionnant respectivement à l'une desdites longueurs d'onde, ou deux moyens de transduction optoélectronique de réception fonctionnant respectivement à l'une desdites longueurs d'onde, suivant que ledit équipement de terminaison est un équipement de terminaison en émission, ou en réception, pour ledit moyen de transmission unidirectionnel à multiplexage en longueur d'onde (ce dernier cas correspondant à titre d'exemple au cas illustré sur cette figure),
- ledit quatrième support S4 supporte un moyen de transduction optoélectronique, d'émission ou de réception, suivant que ledit équipement de terminaison est un équipement de terminaison en émission, ou en réception, pour ledit moyen de transmission unidirectionnel qui n'est pas à multiplexage en longueur d'onde (le premier de ces cas correspondant à titre d'exemple au cas illustré sur cette figure).

L'application d'un dispositif du type illustré sur la figure 4, à un équipement de terminaison de liaison optique comportant deux moyens de transmission optique unidirectionnels, M1, M2, dont l'un M1 est un moyen de transmission unidirectionnel à multiplexage en longueur d'onde, est illustrée sur la figure 16. Suivant cette application :
- ledit moyen de transmission unidirectionnel à multiplexage en longueur d'onde M1 est raccordé audit premier accès de raccordement R1, l'autre moyen de transmission unidirectionnel M2 étant raccordé audit second accès de raccordement R2,
- ledit troisième support S3 supporte un moyen d'aiguillage de faisceau qui est un moyen de séparation de faisceaux en fonction de leur longueur d'onde, de ladite première voie vers ladite troisième voie, d'une part, et de ladite première voie vers ladite deuxième voie, d'autre part, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit deuxième accès de raccordement (ce qui correspond à titre d'exemple au cas illustré sur cette figure), ou inversement; dans ce dernier cas le moyen d'aiguillage de faisceaux est un moyen de combinaison de faisceaux,
- lesdits premier et deuxième support S1, S2 supportent respectivement deux moyens de transduction optoélectronique d'émission fonctionnant respectivement à l'une desdites longueurs d'onde, ou deux moyens de transduction optoélectronique de réception fonctionnant respectivement à l'une desdites longueurs d'onde, suivant que ledit équipement de terminaison est un équipement de terminaison en émission, ou en réception, pour ledit moyen de transmission unidirectionnel à multiplexage en longueur d'onde M1, (ce dernier cas correspondant à titre d'exemple au cas illustré sur cette figure),
- ledit quatrième support S4 supporte un moyen de transduction optoélectronique, d'émission ou de réception suivant que ledit équipement de terminaison est un équipement de terminaison en émission (ce qui correspond au cas illustré sur cette figure), ou en réception, pour celui desdits moyens de transmission unidirectionnel qui n'est pas à multiplexage en longueur d'onde, M2,
- ledit cinquième support S5 ne supporte aucun élément et permet, comme symbolisé sur la figure, auxdites cinquième et septième voie d'être reliées l'une à l'autre.

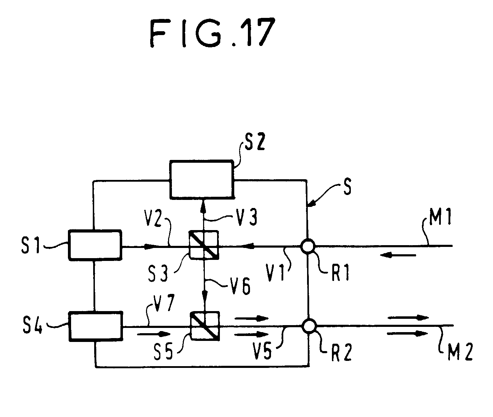

L'application d'un dispositif du type illustré sur la figure 4, à un équipement de terminaison de liaison optique comportant deux moyens de transmission optique unidirectionnels, M1, M2, dont l'un M2 est un moyen de transmission unidirectionnel à multiplexage en longueur d'onde, est illustrée sur la figure 17. Suivant cette application :
- ledit moyen de transmission unidirectionnel M1 est raccordé audit premier accès de raccordement R1, l'autre moyen de transmission unidirectionnel à multiplexage en longueur d'onde M2 étant raccordé audit second accès de raccordement R2,
- ledit troisième support S3 supporte un moyen d'aiguillage de faisceau qui est un moyen de déviation de faisceau d'une part de ladite première voie V1 vers ladite troisième voie V3, ou inversement, suivant que ledit moyen de transmission unidirectionnel qui est affecté à la réception est raccordé audit premier accès de raccordement et ledit moyen de transmission qui est affecté à l'émission est raccordé audit deuxième accès de raccordement (ce qui correspond à titre d'exemple au cas illustré sur cette figure), ou inversement, et d'autre part de ladite deuxième voie vers ladite sixième voie, ou inversement, suivant que ledit moyen de transmission unidirectionnel qui est affecté à la réception est raccordé audit premier accès de raccordement et ledit moyen de transmission qui est affecté à l'émission est raccordé audit deuxième accès de raccordement (ce qui correspond à titre d'exemple au cas illustré sur cette figure), ou inversement,
- ledit cinquième support S5 supporte un moyen d'aiguillage de faisceau qui est un moyen de combinaison de faisceaux en fonction de leur longueur d'onde, de ladite sixième voie vers ladite cinquième voie, d'une part, et de ladite septième voie vers ladite cinquième voie, d'autre part, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit deuxième accès de raccordement (ce qui correspond à titre d'exemple au cas illustré sur cette figure), ou inversement; dans ce dernier cas le moyen d'aiguillage de faisceau est un moyen de séparation de faisceaux,
- lesdits premier et deuxième support S1, S2 supportent respectivement un moyen de transduction optoélectronique d'émission et un moyen de transduction optoélectronique de réception, ou inversement, suivant que le moyen de transmission qui est affecté à la réception est raccordé au premier accès de raccordement et le moyen de transmission qui est affecté à l'émission est raccordé au deuxième accès de raccordement (ce qui correspond à titre d'exemple au cas illustré sur cette figure), ou inversement,
- ledit quatrième support S4 supporte un moyen de transduction optoélectronique, d'émission ou de réception suivant que ledit équipement de terminaison est un équipement de terminaison en émission (ce qui correspond à titre d'exemple au cas illustré sur cette figure), ou en réception, pour celui desdits moyens de transmission unidirectionnels qui est à multiplexage en longueur d'onde, M2.

Les divers éléments mentionnés dans ce qui précède : moyens de transduction optoélectronique (d'émission et de réception), moyens d'aiguillage (de séparation, de combinaison ou de déviation) de faisceaux, peuvent être des moyens classiques qui ne seront donc pas redécrits ici de façon détaillée. On indiquera simplement que, suivant l'application, les moyens de séparation ou de combinaison de faisceaux pourront être constitués par un coupleur émission-réception ou par un multiplexeur ou un démultiplexeur en longueur d'onde, et les moyens de déviation de faisceau pourront être constitués par un miroir, le cas échéant double-face.

Le couplage des moyens de transduction optoélectronique aux voies correspondantes peut par ailleurs être réalisé suivant des techniques classiques, non redécrites ici.

Des lentilles peuvent en outre être utilisées, le cas échéant, pour fournir sur les différentes voies un faisceau parallèle de largeur adaptée à l'utilisation de ces moyens de transduction.

Les accès de raccordement peuvent par ailleurs être constitués par des connecteurs optiques ou par des accès fibrés.

Les voies entre les accès et les moyens d'aiguillage, entre ces moyens d'aiguillage et les moyens de transduction optoélectronique ainsi qu'entre les moyens d'aiguillage, sont réalisées, par exemple, directement dans l'air ou par l'intermédiaire de différents types de support pouvant constituer des canaux de transmission optique.

Il peut aussi être envisagé, éventuellement, d'intercaler entre moyen de séparation de faisceau et moyen de transduction optoélectronique, un filtre supplémentaire.

## Revendications

1. Dispositif de transduction optoélectronique pour équipement de terminaison de liaison optique, comportant :
- un accès de raccordement (R1) pour ladite liaison optique dit premier accès de raccordement,
- deux supports, dits premier et deuxième support (S1, S2) aptes à supporter des moyens de transduction optoélectronique dits respectivement premier et deuxième moyen de transduction optoélectronique,
- un support, dit troisième support (S3), apte à supporter un moyen d'aiguillage de faisceau, dit premier moyen d'aiguillage de faisceau, ces éléments étant localisés dans une même structure (S) et étant disposés les uns par rapport aux autres de façon à autoriser une transmission optique entre ledit premier accès de raccordement et ledit premier moyen d'aiguillage de faisceau, d'une part, et entre chacun desdits moyens de transduction optoélectronique et ledit premier moyen d'aiguillage de faisceau, d'autre part, définissant ainsi à l'intérieur de ladite structure des voies de transmission optique dites respectivement première, deuxième, et troisième voie (V1, V2, V3),
dispositif caractérisé en ce qu'il comporte en outre un autre accès de raccordement pour ladite liaison optique, dit deuxième accès de raccordement (R2), et un autre support, dit cinquième support (S5), apte à supporter un autre moyen d'aiguillage de faisceau, dit deuxième moyen d'aiguillage de faisceau, ces deux derniers éléments étant également localisés dans ladite structure (S) et étant disposés l'un par rapport à l'autre et par rapport aux éléments précédents de façon à autoriser une transmission optique entre ledit deuxième moyen d'aiguillage de faisceau et ledit deuxième accès de raccordement, d'une part, et entre ledit deuxième moyen d'aiguillage de faisceau et ledit premier moyen d'aiguillage de faisceau d'autre part, définissant ainsi à l'intérieur de ladite structure deux autres voies de transmission optique, dites respectivement cinquième et sixième voie (V5, V6).

2. Dispositif selon la revendication 1, caractérisé en ce qu'il comporte en outre un autre support, dit quatrième support (54), apte à supporter un autre moyen de transduction optoélectronique, dit troisième moyen de transduction optoélectronique,
cet autre élément étant également localisé dans ladite structure (S) et étant disposé par rapport aux éléments précédents de façon à autoriser en outre une transmission optique entre ledit deuxième moyen d'aiguillage de faisceau et ledit troisième moyen de transduction optoélectronique, définissant ainsi à l'intérieur de ladite structure une autre voie de transmission optique, dite septième voie ( V7).

3. Application d'un dispositif selon la revendication 1, à un équipement de terminaison d'une liaison optique bidirectionnelle comportant un seul moyen de transmission, bidirectionnel, (E/R) caractérisée en ce que :
- ledit moyen de transmission bidirectionnel (E/R) est raccordé audit premier accès de raccordement (R1),
- ledit troisième support (S3) supporte un moyen d'aiguillage de faisceau qui est un moyen de séparation de faisceaux émission et réception,
- lesdits premier et deuxième support (S1, S2) supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission, ou inversement,
- ledit cinquième support (S5) ne supporte aucun élément, et ledit deuxième accès de raccordement (R2) n'est raccordé à aucun moyen de transmission optique.

4. Application d'un dispositif selon la revendication 2, à un équipement de terminaison d'une liaison optique bidirectionnelle comportant un seul moyen de transmission, bidirectionnel (E/R), caractérisée en ce que :
- ledit moyen de transmission bidirectionnel (E/R) est raccordé audit premier accès de raccordement (R1),
- ledit troisième support (S3) supporte un moyen d'aiguillage de faisceau qui est un moyen de séparation de faisceaux émission et réception,
- lesdits premier et deuxième support (S1, S2) supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission, ou inversement,
- ledit quatrième support (S4) et ledit cinquième support (S5) ne supportent aucun élément, et ledit deuxième accès de raccordement (R2) n'est raccordé à aucun moyen de transmission optique.

5. Application d'un dispositif selon la revendication 1, à un équipement de terminaison d'une liaison optique bidirectionnelle comportant deux moyens de transmission (E, R), unidirectionnels, affectés respectivement à l'émission et à la réception, caractérisée en ce que :
- lesdits moyens de transmission unidirectionnels (E, R) sont raccordés l'un audit premier accès de raccordement (R1) et l'autre audit deuxième accès de raccordement (R2),
- ledit troisième support (S3) supporte un moyen d'aiguillage de faisceau qui est un moyen de déviation de faisceau d'une part de ladite première voie (V1) vers ladite troisième voie (V3), ou inversement, suivant que ledit moyen de transmission unidirectionnel qui est affecté à la réception est raccordé audit premier accès de raccordement, et ledit moyen de transmission unidirectionnel qui est affecté à l'émission est raccordé audit second accès de raccordement ou inversement, et d'autre part de ladite deuxième voie vers ladite sixième voie, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit second accès de raccordement ou inversement,
- ledit cinquième support (S5) supporte un moyen d'aiguillage de faisceau qui est un moyen de déviation de faisceau de ladite sixième voie vers ladite cinquième voie, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit second accès de raccordement, ou inversement,
- lesdits premier et deuxième support (S1, S2) supportent respectivement un moyen de transduction optoélectronique d'émission et un moyen de transduction optoélectronique de réception, ou inversement, suivant que ledit moyen de transmission unidirectionnel qui est affecté à la réception est raccordé au premier accès de raccordement, et le moyen de transmission unidirectionnel qui est affecté à l'émission est raccordé au deuxième accès de raccordement, ou inversement.

6. Application d'un dispositif suivant la revendication 2, à un équipement de terminaison d'une liaison optique bidirectionnelle comportant deux moyens de transmission (E, R), unidirectionnels, affectés respectivement à l'émission et à la réception, caractérisée en ce que :
- lesdits moyens de transmission unidirectionnels (E, R) sont raccordés l'un audit premier accès de raccordement (R1) et l'autre audit deuxième accès de raccordement (R2),
- ledit troisième support (S3) supporte un moyen d'aiguillage de faisceau qui est un moyen de déviation de faiceau de la première voie vers la troisième voie, ou inversement, suivant que ledit moyen de transmission qui est affecté à la réception est raccordé audit premier accès de raccordement et ledit moyen de transmission qui est affecté à l'émission est raccordé audit second accès de raccordement, ou inversement,
- ledit quatrième support (S4) supporte un moyen de transduction optoélectronique, d'émission ou de réception suivant que ledit moyen de transmission qui est affecté à l'émission (E) est raccordé au deuxième accès de raccordement (R2), et ledit moyen de transmission qui est affecté à la réception (R) est raccordé audit premier accès de raccordement (R1) ou inversement,
- l'un desdits premier et deuxième support (S1-S2) supporte un moyen de transduction optoélectronique, de réception ou d'émission suivant que ledit moyen de transmission qui est affecté à la réception (R) est raccordé au premier accès de raccordement (R1) et ledit moyen de transmission qui est affecté à la l'émission (E) est raccordé au deuxième accès de raccordement (R2,) ou inversement, l'autre desdits premier et deuxième support ne supportant alors aucun élément,
- ledit cinquième support ne supporte aucun élément et permet auxdites cinquième et septième voie d'être reliées l'une à l'autre.

7. Application d'un dispositif suivant la revendication 2, à un équipement de terminaison d'une liaison optique bidirectionnelle comportant deux moyens de transmission (E, R), unidirectionnels, affectés respectivement à l'émission et à la réception, caractérisée en ce que :
- lesdits moyens de transmission unidirectionnels (E, R) sont raccordés l'un audit premier accès de raccordement (R1) et l'autre audit deuxième accès de raccordement (R2),
- ledit troisième support (S3) supporte un moyen d'aiguillage de faisceau qui est un moyen de déviation de faisceau d'une part de ladite première voie (V1) vers ladite troisième voie (V3), ou inversement, suivant que ledit moyen de transmission unidirectionnel qui est affecté à la réception est raccordé audit premier accès de raccordement (R1) et ledit moyen de transmission unidirectionnel qui est affecté à l'émission est raccordé audit second accès de raccordement (R2), ou inversement, et d'autre part de ladite deuxième voie vers ladite sixième voie, ou inversement, suivant que ledit moyen de transmission unidirectionnel qui est affecté à la réception est raccordé audit premier accès de raccordement et ledit moyen de transmission unidirectionnel qui est affecté à l'émission est raccordé audit second accès de raccordement ou inversement,
- ledit cinquième support (S5) supporte un moyen d'aiguillage de faisceau qui est un moyen de déviation de faisceau de ladite sixième voie vers ladite cinquième voie, ou inversement, suivant que ledit moyen de transmission unidirectionnel qui est affecté à la réception est raccordé audit premier accès de raccordement et le moyen de transmission unidirectionnel qui est affecté à l'émission est raccordé audit second accès de raccordement, ou inversement,
- lesdits premier et deuxième support (S1, S2) supportent respectivement un moyen de transduction optoélectronique d'émission et un moyen de transduction optoélectronique de réception, ou inversement, suivant que ledit moyen de transmission qui est affecté à la réception est raccordé au premier accès de raccordement, et ledit moyen de transmission qui est affecté à l'émission est raccordé au deuxième accès de raccordement, ou inversement,
- ledit quatrième support ne supporte aucun élément.

8. Application d'un dispositif suivant la revendication 2, à un équipement de terminaison de liaison optique comportant un moyen de transmission optique bidirectionnel (E/R) et un moyen de transmission optique unidirectionnel (M), caractérisée en ce que :
- ledit moyen de transmission optique bidirectionnel (E/R) est raccordé au premier accès de raccordement (R1),
- ledit moyen de transmission optique unidirectionnel (M) est raccordé au second accès de raccordement (R2),
- ledit troisième support (S3) supporte un moyen d'aiguillage de faisceau qui est un moyen de séparation de faisceaux d'émission et de réception,
- lesdits premier et deuxième support (S1, S2) supportent respectivement un moyen de transduction optoélectronique d'émission et un moyen de transduction optoélectronique de réception, ou inversement, suivant que ledit faisceau d'émission emprunte ladite deuxième voie de transmission et ledit faisceau de réception ladite troisième voie de transmission, ou inversement,
- ledit quatrième support (S4) supporte un moyen de transduction optoélectronique d'émission ou de réception suivant que ledit équipement de terminaison est un équipement de terminaison en émission ou en réception pour ledit moyen de transmission optique unidirectionnel (M),
- ledit cinquième support (S5) ne supporte aucun élément et permet auxdites cinquième et septième voie d'être reliées l'une à l'autre.

9. Application d'un dispositif suivant la revendication 2, à un équipement de terminaison de liaison optique comportant deux moyens de transmission optique unidirectionnels (M1, M2) dont l'un (M1) est un moyen de transmission unidirectionnel à multiplexage en longueur d'onde, caractérisée en ce que :
- ledit moyen de transmission unidirectionnel à multiplexage en longueur d'onde (M1) est raccordé audit premier accès de raccordement (R1), l'autre moyen de transmission unidirectionnel (M2) étant raccordé audit second accès de raccordement (R2),
- ledit troisième support (S3) supporte un moyen d'aiguillage de faisceau qui est un moyen de séparation ou de combinaison de faisceaux en fonction de leur longueur d'onde,
- lesdits premier et deuxième support (S1, S2) supportent respectivement deux moyens de transduction optoélectronique d'émission fonctionnant respectivement à l'une desdites longueurs d'onde, ou deux moyens de transduction optoélectronique de réception fonctionnant respectivement à l'une desdites longueurs d'onde, suivant que ledit équipement de terminaison est un équipement de terminaison en émission, ou en réception, pour ledit moyen de transmission unidirectionnel à multiplexage en longueur d'onde (M1),
- ledit quatrième support (S4) supporte un moyen de transduction optoélectronique d'émission, ou de réception, suivant que ledit équipement de terminaison est un équipement de terminaison en émission, ou en réception, pour celui desdits moyens de transmission unidirectionnels qui n'est pas à multiplexage en longueur d'onde (M2),
- ledit cinquième support (S5) ne supporte aucun élément et permet auxdites cinquième et septième voie d'être reliées l'une à l'autre.

10. Application d'un dispositif suivant la revendication 2, à un équipement de terminaison de liaison optique comportant deux moyens de transmission optique unidirectionnels (M1, M2) dont l'un (M2) est un moyen de transmission unidirectionnel à multiplexage en longueur d'onde, caractérisée en ce que :
- ledit moyen de transmission unidirectionnel à multiplexage en longueur d'onde (M2) est raccordé audit second accès de raccordement (R2), l'autre moyen de transmission unidirectionnel (M1) étant raccordé audit premier accès de raccordement (R1),
- ledit cinquième support (S5) supporte un moyen d'aiguillage de faisceau qui est un moyen de séparation ou de combinaison de faisceaux en fonction de leur longueur d'onde,
- lesdits premier et quatrième support (S1, S4) supportent respectivement deux moyens de transduction optoélectronique d'émission fonctionnant respectivement à l'une desdites longueurs d'onde, ou deux moyens de transduction optoélectronique de réception fonctionnant respectivement à l'une desdites longueurs d'onde, suivant que ledit équipement de terminaison est un équipement de terminaison en émission, ou en réception, pour ledit moyen de transmission unidirectionnel à multiplexage en l'ongueur d'onde (M2),
- ledit deuxième support (S2) supporte un moyen de transduction optoélectronique, de réception ou d'émission, suivant que ledit équipement de terminaison est un équipement de terminaison en réception, ou en émission, pour celui desdits moyens de transmission unidirectionnels qui n'est pas à multiplexage en longueur d'onde (M1),
- ledit troisième support (S3) supporte un moyen d'aiguillage de faisceau qui est un moyen de déviation de faisceau d'une part de ladite première voie (V1) vers ladite troisième voie (V3), ou inversement, suivant que ledit moyen de transmission unidirectionnel qui est affecté à la réception est raccordé audit premier accès de raccordement (R1) et ledit moyen de transmission unidirectionnel qui est affecté à l'émission est raccordé audit second accès de raccordement (R2), ou inversement, et d'autre part de ladite deuxième voie (V2) vers ladite sixième voie (V6), ou inversement, suivant que ledit moyen de transmission unidirectionnel qui est affecté à l'émission est raccordé audit second accès de raccordement et ledit moyen de transmission unidirectionnel qui est affecté à la réception est raccordé audit premier accès de raccordement ou inversement.

## Patentansprüche

1. Optoelektronische Wandlervorrichtung für Endgerät einer optischen Verbindung, mit:
- einem Anschlußzugang (R1) für die optische Verbindung, als erster Anschlußzugang bezeichnet,
- zwei Trägern, als erster und zweiter Träger (S1, S2) bezeichnet, die in der Lage sind, optoelektronische Wandlermittel, als erstes bzw. zweites optoelektronisches Wandlermittel bezeichnet, zu tragen,
- einem Träger, als dritter Träger (S3) bezeichnet, der in der Lage ist, ein Strahlumschaltmittel (als erstes Strahlumschaltmittel) bezeichnet, zu tragen,
wobei diese Elemente in ein- und derselben Struktur (S) lokalisiert sind und in Bezug zueinander so angeordnet sind, daß sie eine optische Übertragung zwischen dem ersten Anschlußzugang und dem ersten Strahlumschaltmittel einerseits und zwischen jedem der optoelektronischen Wandlermittel und dem ersten Strahlumschaltmittel andererseits gestatten und so innerhalb der Struktur optische Übertragungskanäle, jeweils als erster, zweiter bzw. dritter Übertragungskanal (V1, V2, V3) bezeichnet, definieren, **dadurch gekennzeichnet,** daß sie ferner einen anderen Anschlußzugang für die optische Verbindung, als zweiter Anschlußzugang (R2) bezeichnet, und einen anderen Träger, als fünfter Träger (S5) bezeichnet, umfaßt, der in der Lage ist, ein anderes Strahlumschaltmittel, als zweites Strahlumschaltmittel bezeichnet, zu tragen, wobei die zwei letzteren Elemente ebenfalls in der Struktur (S) lokalisiert sind und in Bezug zueinander und zu den vorhergehenden Elementen so angeordnet sind, daß sie eine optische Übertragung zwischen dem zweiten Strahlumschaltmittel und dem zweiten Anschlußzugang einerseits und zwischen dem zweiten Strahlumschaltmittel und dem ersten Strahlumschaltmittel andererseits gestatten und so innerhalb der Struktur zwei optische Übertragungskanäle, jeweils als fünfter bzw. sechster Kanal (V5, V6) bezeichnet, definieren.

2. Vorrichtung nach Anspruch 1, dadurch gekennzeichnet, daß sie ferner einen anderen Träger, als vierter Träger (S4) bezeichnet, umfaßt, der in der Lage ist, ein anderes optoelektronisches Wandlermittel, als drittes optoelektronisches Wandlermittel bezeichnet, zu tragen, wobei dieses andere Element ebenfalls in der Struktur (S) lokalisiert ist und in Bezug zu den vorhergehenden Elementen so angeordnet ist, daß es ferner eine optische Übertragung zwischen dem zweiten Strahlumschaltmittel und dem dritten optoelektronischen Wandlermittel gestattet und so innerhalb der Struktur einen anderen optischen Übertragungskanal, als siebter Kanal (V7) bezeichnet, definiert.

3. Anwendung einer Vorrichtung nach Anspruch 1 auf ein Endgerät einer bidirektionalen optischen Verbindung mit einem einzigen bidirektionalen Übertragungsmittel (E/R), dadurch gekennzeichnet, daß:
- das bidirektionale Übertragungsmittel (E/R) an den ersten Anschlußzugang (R1) angeschlossen ist,
- der dritte Träger (S3) ein Strahlumschaltmittel trägt, das ein Mittel zum Trennen von Sende- und Empfangsstrahl ist,
- erster und zweiter Träger (S1, S2) jeweils ein optoelektronisches Sendewandlermittel bzw. ein optoelektronisches Empfangswandlermittel tragen, oder umgekehrt, je nachdem, ob der Sendestrahl den zweiten Übertragungskanal und der Empfangsstrahl den dritten Übertragungskanal nimmt, oder umgekehrt,
- der fünfte Träger (S5) kein Element trägt, und der zweite Anschlußzugang (R2) an kein optisches Übertragungsmittel angeschlossen ist.

4. Anwendung einer Vorrichtung nach Anspruch 2 auf ein Endgerät einer bidirektionalen optischen Verbindung mit einem einzigen bidirektionalen Übertragungsmittel (E/R), dadurch gekennzeichnet, daß:
- das bidirektionale Übertragungsmittel (E/R) an den ersten Anschlußzugang (R1) angeschlossen ist,
- der dritte Träger (S3) ein Strahlumschaltmittel trägt, das ein Mittel zum Trennen von Sende- und Empfangsstrahl ist,
- erster und zweiter Träger (S1, S2) jeweils ein optoelektronisches Sendewandlermittel bzw. ein optoelektronisches Empfangswandlermittel tragen, oder umgekehrt, je nachdem, ob der Sendestrahl den zweiten Übertragungskanal und der Empfangsstrahl den dritten Übertragungskanal nimmt, oder umgekehrt,
- der vierte Träger (S4) und der fünfte Träger (S5) kein Element tragen, und der zweite Anschlußzugang (R2) an kein optisches Übertragungsmittel angeschlossen ist.

5. Anwendung einer Vorrichtung nach Anspruch 1 auf ein Endgerät einer bidirektionalen optischen Verbindung mit zwei unidirektionalen Übertragungsmitteln (E, R), die jeweils dem Senden bzw. dem Empfang zugeordnet sind, dadurch gekennzeichnet, daß:
- von den unidirektionalen Übertragungsmitteln (E, R) das eine an den ersten Anschlußzugang (R1) und das andere an den zweiten Anschlußzugang (R2) angeschlossen ist,
- der dritte Träger (S3) ein Strahlumschaltmittel trägt, das ein Mittel zum Strahlablenken einerseits vom ersten Kanal (V1) zum dritten Kanal (V3), oder umgekehrt, je nachdem, ob das dem Empfang zugeordnete unidirektionale Übertragungsmittel an den ersten Anschlußzugang angeschlossen ist und das dem Senden zugeordnete unidirektionale Übertragungsmittel an den zweiten Anschlußzugang angeschlossen ist, oder umgekehrt, und andererseits vom zweiten Kanal zum sechsten Kanal oder umgekehrt ist, je nachdem, ob das dem Empfang zugeordnete unidirektionale Übertragungsmittel an den ersten Anschlußzugang angeschlossen ist und das dem Senden zugeordnete unidirektionale Übertragungsmittel an den zweiten Anschlußzugang angeschlossen ist, oder umgekehrt,
- der fünfte Träger (S5) ein Strahlumschaltmittel trägt, das ein Mittel zum Strahlablenken vom sechsten Kanal zum fünften Kanal oder umgekehrt ist, je nachdem, ob das dem Empfang zugeordnete unidirektionale Übertragungsmittel an den ersten Anschlußzugang angeschlossen ist und das dem Senden zugeordnete unidirektionale Übertragungsmittel an den zweiten Anschlußzugang angeschlossen ist, oder umgekehrt,
- erster und zweiter Träger (S1, S2) jeweils ein optoelektronisches Sendewandlermittel bzw. ein optoelektronisches Empfangswandlermittel, oder umgekehrt, tragen, je nachdem, ob das dem Empfang zugeordnete unidirektonale Übertragungsmittel an den ersten Anschlußzugang angeschlossen ist und das dem Senden zugeordnete unidirektionale Übertragungsmittel an den zweiten Anschlußzugang angeschlossen ist oder umgekehrt.

6. Anwendung einer Vorrichtung nach Anspruch 2 auf ein Endgerät einer bidirektionalen optischen Verbindung mit zwei unidirektionalen Übertragungsmitteln (E, R), die jeweils dem Senden bzw. dem Empfang zugeordnet sind, dadurch gekennzeichnet, daß:
- von den unidirektionalen Übertragungsmitteln (E, R) das eine an den ersten Anschlußzugang (R1) und das andere an den zweiten Anschlußzugang (R2) angeschlossen ist,
- der dritte Träger (S3) ein Strahlumschaltmittel trägt, das ein Mittel zum Strahlablenken vorn ersten Kanal zum dritten Kanal oder umgekehrt ist, je nachdem, ob das dem Empfang zugeordnete Übertragungsmittel an den ersten Anschlußzugang angeschlossen ist und das dem Senden zugeordnete Übertragungsmittel an den zweiten Anschlußzugang angeschlossen ist, oder umgekehrt,
- der vierte Träger (S4) ein optoelektronisches Wandlermittel zum Senden oder Empfangen trägt, je nachdem, ob das dem Senden zugeordnete Übertragungsmittel (E) an den zweiten Anschlußzugang (R2) angeschlossen ist und das dem Empfang zugeordnete Übertragungsmittel (R) an den ersten Anschlußzugang (R1) angeschlossen ist, oder umgekehrt,
- vom ersten und zweiten Träger (S1, S2) der eine ein optoelektronisches Empfangs- oder Sendewandlermittel trägt, je nachdem, ob das dem Empfang zugeordnete Übertragungsmittel (R) an den ersten Anschlußzugang (R1) angeschlossen ist und das dem Senden zugeordnete Übertragungsmittel (E) an den zweiten Anschlußzugang (R2) angeschlossen ist, oder umgekehrt, wobei der jeweils andere von erstem und zweiten Träger dann kein Element trägt,
- der fünfte Träger kein Element trägt und die Verbindung von fünftem und siebtem Kanal miteinander gestattet.

7. Anwendung einer Vorrichtung nach Anspruch 2 auf ein Endgerät einer bidirektionalen optischen Verbindung mit zwei unidirektionalen Übertragungsmitteln (E, R), die jeweils dem Senden bzw. dem Empfang zugeordnet sind, dadurch gekennzeichnet, daß:
- von den unidirektionalen Übertragungsmitteln (E, R) das eine an den ersten Anschlußzugang (R1) und das andere an den zweiten Anschlußzugang (R2) angeschlossen ist,
- der dritte Träger (S3) ein Strahlumschaltmittel trägt, das ein Mittel zum Strahlablenken einerseits vom ersten Kanal (V1) zum dritten Kanal (V3) oder umgekehrt, je nachdem, ob das dem Empfang zugeordnete unidirektionale Übertragungsmittel an den ersten Anschlußzugang (R1) angeschlossen ist und das dem Senden zugeordnete unidirektionale Übertragungsmittel an den zweiten Anschlußzugang (R2) angeschlossen ist, oder umgekehrt, und andererseits vom zweiten Kanal zum sechsten Kanal oder umgekehrt ist, je nachdem, ob das dem Empfang zugeordnete unidirektionale Übertragungsmittel an den ersten Anschlußzugang angeschlossen ist und das dem Senden zugeordnete unidirektionale Übertragungsmittel an den zweiten Anschlußzugang angeschlossen ist, oder umgekehrt,
- der fünfte Träger (S5) ein Strahlumschaltmittel trägt, das ein Mittel zum Strahlablenken vom sechsten Kanal zum fünften Kanal oder umgekehrt ist, je nachdem, ob das dem Empfang zugeordnete unidirektionale Übertragungsmittel an den ersten Anschlußzugang angeschlossen ist und das dem Senden zugeordnete unidirektonale Übertragungsmittel an den zweiten Anschlußzugang angeschlossen ist, oder umgekehrt,
- erster und zweiter Träger (S1, S2) jeweils ein optoelektronisches Sende- bzw. Empfangswandlermittel tragen, oder umgekehrt, je nachdem, ob das dem Empfang zugeordnete unidirektionale Übertragungsmittel an den ersten Anschlußzugang angeschlossen ist und das dem Senden zugeordnete unidirektionale Übertragungsmittel an den zweiten Anschlußzugang angeschlossen ist, oder umgekehrt,
- der vierte Träger kein Element trägt.

8. Anwendung einer Vorrichtung nach Anspruch 2 auf ein Endgerät einer optischen Verbindung mit einem bidirektionalen optischen Übertragungsmittel (E/R) und einem unidirektionalen optischen Übertragungsmittel (M), dadurch gekennzeichnet, daß:
- das bidirektionale optische Übertragungsmittel (E/R) an den ersten Anschlußzugang (R1) angeschlossen ist,
- das unidirektionale optische Übertragungsmittel (M) an den zweiten Anschlußzugang (R2) angeschlossen ist,
- der dritte Träger (S3) ein Strahlumschaltmittel trägt, das ein Mittel zum Trennen von Sende- und Empfangsstrahl ist,
- erster und zweiter Träger (S1, S2) jeweils ein optoelektronisches Sendewandlermittel bzw. ein optoelektronisches Empfangswandlermittel tragen, oder umgekehrt, je nachdem, ob der Sendestrahl den zweiten Übertragungskanal und der Empfangsstrahl den dritten Übertragungskanal nimmt, oder umgekehrt,
- der vierte Träger (S4) ein optoelektronisches Sende- oder Empfangswandlermittel trägt, je nachdem, ob das Endgerät ein Sende- oder Empfangsendgerät für das unidirektionale optische Übertragungsmittel (M) ist,
- der fünfte Träger (S5) kein Element trägt und es gestattet, den fünften und den siebten Kanal miteinander zu verbinden.

9. Anwendung einer Vorrichtung nach Anspruch 2 auf ein Endgerät einer optischen Verbindung mit zwei unidirektionalen optischen Übertragungsmitteln (M1, M2), von denen das eine (M1) ein unidirektionales Übertragungsmittel mit Wellenlängenmultiplex ist, dadurch gekennzeichnet, daß:
- das unidirektionale Übertragungsmittel mit Wellenlängenmultiplex (M1) an den ersten Anschlußzugang (R1) und das andere unidirektionale Übertragungsmittel (M2) an den zweiten Anschlußzugang (R2) angeschlossen ist,
- der dritte Träger (S3) ein Strahlumschaltmittel trägt, das ein Mittel zum Trennen oder Kombinieren von Strahlen in Funktion ihrer Wellenlänge ist,
- erster und zweiter Träger (S1, S2) jeweils zwei optoelektronische Sendeübertragungsmittel, die jeweils auf einer der Wellenlängen arbeiten, oder zwei optoelektronische Empfangswandlermittel, die jeweils auf einer der Wellenlängen arbeiten, tragen, je nachdem, ob das Endgerät ein Sende- oder Empfangsendgerät für das unidirektionale Übertragungsmittel mit Wellenlängenmultiplex (M1) ist,
- der vierte Träger (S4) ein optoelektronisches Sende- oder Empfangswandlermittel trägt, je nachdem, ob das Endgerät ein Sende- oder Empfangsendgerät für dasjenige der unidirektionalen Übertragungsmittel ohne Wellenlängenmultiplex (M2) ist,
- der fünfte Träger (S5) kein Element trägt und es gestattet, den fünften und den siebten Kanal miteinander zu verbinden.

10. Anwendung einer Vorrichtung nach Anspruch 2 auf ein Endgerät einer optischen Verbindung mit zwei unidirektionalen optischen Übertragungsmitteln (M1, M2), von denen eines (M2) ein unidirektionales Übertragungsmittel mit Wellenlängenmultiplex ist, dadurch gekennzeichnet, daß:
- das unidirektionale Übertragungsmittel mit Wellenlängenmultiplex (M2) an den zweiten Anschlußzugang (R2) angeschlossen ist und das andere unidirektionale Übertragungsmittel (M1) an den ersten Anschlußzugang (R1) angeschlossen ist,
- der fünfte Träger (S5) ein Strahlumschaltmittel trägt, das ein Mittel zum Trennen oder zum Kombinieren von Strahlen in Funktion ihrer Wellenlänge ist,
- der erste und der vierte Träger (S1, S4) jeweils zwei optoelektronische Sendewandlermittel, die jeweils bei einer der Wellenlängen arbeiten, oder zwei optoelektronische Empfangswandlermittel, die jeweils bei einer der Wellenlängen arbeiten, tragen, je nachdem, ob das Endgerät ein Sende- oder Empfangsendgerät für das unidirektionale Übertragungsmittel mit Wellenlängenmultiplex (M2) ist,
- der zweite Träger (S2) ein optoelektronisches Empfangs- oder Sendewandlermittel trägt, je nachdem, ob das Endgerät ein Empfangs- oder Sendeendgerät für das unidirektionale Übertragungsmittel ohne Wellenlängenmultiplex (M1) ist,
- der dritte Träger (S3) ein Strahlumschaltmittel trägt, das ein Mittel zum Strahlablenken einerseits vom ersten Kanal (V1) zum dritten Kanal (V3) oder umgekehrt, je nachdem, ob das dem Empfang zugeordnete unidirektionale Übertragungsmittel an den ersten Anschlußzugang (R1) angeschlossen ist und das dem Senden zugeordnete unidirektionale Übertragungsmittel an den zweiten Anschlußzugang (R2) angeschlossen ist, oder umgekehrt, und andererseits vom zweiten Kanal (V2) zum sechsten Kanal (V6) oder umgekehrt ist, je nachdem, ob das dem Senden zugeordnete unidirektionale Übertragungsmittel an den zweiten Anschlußzugang und das dem Empfang zugeordnete unidirektionale Übertragungsmittel an den ersten Anschlußzugang angeschlossen ist, oder umgekehrt.

## Claims

1. Opto-electronic transducer device for optical link termination equipment comprising:
- a first connection port (R1) for said optical link,
- first and second supports (S1, S2) adapted to support respective first and second opto-electronic transducer means, and
- a third support (S3) adapted to support first beam switching means, these components being located in a common structure (S) and disposed relative to each other so as to enable optical transmission between said first connection port and said first beam switching means and between each of said opto-electronic transducer means and said first beam switching means, so defining within said structure first, second and third optical transmission channels (V1, V2, V3), characterised in that it further comprises a second connection port (R2) for said optical link and a fifth support (S5) adapted to support second beam switching means, these latter two components being also located in said structure (S) and disposed relative to each other and relative to the previous components to enable optical transmission between said second beam switching means and said second connection port and between said second beam switching means and said first beam switching means, so defining within said structure fifth and sixth optical transmission channels (V5, V6).

2. Device according to claim 1 characterised in that it further comprises a fourth support (S4) adapted to support third opto-electronic transducer means also located in said structure (S) and disposed relative to the previous components to enable optical transmission between said second beam switching means and said third opto-electronic transducer means, so defining within said structure a seventh optical transmission channel (V7).

3. Application of a device according to claim 1 to termination equipment of a bidirectional optical link comprising a single bidirectional transmission medium (E/R) characterised in that:
- said bidirectional transmission medium (E/R) is connected to said first connection port (R1),
- said third support (S3) supports beam switching means comprising send and receive beam splitter means,
- said first and second supports (S1, S2) respectively support send and receive opto-electronic transducer means or vice versa depending on whether said send beam is conveyed by said second transmission channel and said receive beam is conveyed by said third transmission channel or vice versa, and
- said fifth support (S5) does not support any component and said second connection port (R2) is not connected to any optical transmission medium.

4. Application of a device according to claim 2 to termination equipment of a bidirectional optical link comprising a single bidirectional transmission medium (E/R) characterised in that:
- said bidirectional transmission medium (E/R) is connected to said first connection port (R1),
- said third support (S3) supports beams switching means comprising send and receive beam splitter means,
- said first and second supports (S1, S2) respectively support send and receive opto-electronic transducer means or vice versa depending on whether said send beam is conveyed by said second transmission channel and said receive beam is conveyed by said third transmission channel or vice versa, and
- said fourth support (S4) and said fifth support (S5) do not support any component and said second connection port (R2) is not connected to any optical transmission medium.

5. Application of a device according to claim 1 to termination equipment of a bidirectional optical link comprising two unidirectional transmission media (E, R) respectively assigned to sending and receiving characterised in that:
- one of said unidirectional transmission media (E, R) is connected to said first connection port (R1) and the other to said second connection port (R2),
- said third support (S3) supports beam switching means comprising means for deflecting the beam from said first channel (V1) to said third channel (V3) or vice versa depending on whether said unidirectional transmission medium assigned to receiving is connected to said first connection port and said unidirectional transmission medium assigned to sending is connected to said second connection port or vice versa and from said second channel to said sixth channel or vice versa depending on whether said unidirectional transmission medium assigned to receiving is connected to said first connection port and said unidirectional transmission medium assigned to sending is connected to said second connection port or vice versa,
- said fifth support (S5) supports beam switching means comprising means for deflecting the beam from said sixth channel to said fifth channel or vice versa depending on whether said unidirectional transmission medium assigned to receiving is connected to said first connection port and said unidirectional transmission medium assigned to sending is connected to said second connection port or vice versa, and
- said first and second supports (S1, S2) respectively support send and receive opto-electronic transducer means or vice versa depending on whether said unidirectional transmission medium assigned to sending is connected to said second connection port and said unidirectional transmission medium assigned to receiving is connected to the first connection port or vice versa.

6. Application of a device according to claim 2 to termination equipment of a bidirectional optical link comprising two unidirectional transmission media (E, R) respectively assigned to sending and receiving characterised in that:
- one of said unidirectional transmission media (E, R) is connected to said first connection port (R1) and the other to said second connection port (R2),
- said third support (S3) supports beam switching means comprising means for deflecting the beam from the first channel to the third channel or vice versa depending on whether said transmission medium assigned to receiving is connected to said first connection port and said transmission medium assigned to sending is connected to said second connection port or vice versa,
- said fourth support (S4) supports send or receive opto-electronic transducer means depending on whether said transmission medium (E) assigned to sending is connected to the second connection port (R2) and said transmission medium (R) assigned to receiving is connected to said first connection port (R1) or vice versa,
- one of said first and second supports (S1-S2) supports receive or send opto-electronic transducer means depending on whether said transmission medium (R) assigned to receiving is connected to the first connection port (R1) and said transmission medium (E) assigned to sending is connected to the second connection port (R2) or vice versa, the other of said first and second supports then not supporting any component, and
- said fifth support does not support any component and enables said fifth and seventh channels to be connected together.

7. Application of a device according to claim 2 to termination equipment of a bidirectional optical link comprising two unidirectional transmission media (E, R) respectively assigned to sending and receiving characterised in that:
- one of said unidirectional transmission media (E, R) is connected to said first connection port (R1) and the other to said second connection port (R2),
- said third support (S3) supports beam switching means comprising means for deflecting the beam from said first channel (V1) to said third channel (V3) or vice versa depending on whether said unidirectional transmission medium assigned to receiving is connected to said first connection port (R1) and said unidirectional transmission medium assigned to sending is connected to said second connection port (R2) or vice versa and from said second channel to said sixth channel or vice versa depending on whether said unidirectional transmission medium assigned to receiving is connected to said first connection port and said unidirectional transmission medium assigned to sending is connected to said second connection port or vice versa,
- said fifth support (S5) supports beam switching means comprising means for deflecting the beam from said sixth channel to said fifth channel or vice versa depending on whether said unidirectional transmission medium assigned to receiving is connected to said first connection port and the unidirectional transmission medium assigned to sending is connected to said second connection port or vice versa,
- said first and second supports (S1, S2) respectively support send and receive opto-electronic transducer means or vice versa depending on whether the transmission medium assigned to receiving is connected to the first connection port and said transmission medium assigned to sending is connected to the second connection port or vice versa, and
- said fourth support does not support any component.

8. Application of a device according to claim 2 to termination equipment of an optical link comprising a bidirectional optical transmission medium (E/R) and a unidirectional optical transmission medium (M) characterised in that:
- said bidirectional optical transmission medium (E/R) is connected to the first connection port (R1),
- said unidirectional optical transmission medium (M) is connected to the second connection port (R2),
- said third support (S3) supports beam switching means comprising send and receive beam splitter means,
- said first and second supports (S1, S2) respectively support send and receive opto-electronic transducer means or vice versa depending on whether said send beam is conveyed by said second transmission channel and said receive beam is conveyed by said third transmission channel or vice versa,
- said fourth support (S4) supports send or receive opto-electronic transducer means depending on whether said termination equipment is a send or receive termination equipment for said unidirectional transmission medium (M), and
- said fifth support (S5) does not support any component and enables said fifth and seventh channels to be connected together.

9. Application of a device according to claim 2 to termination equipment of an optical link comprising two unidirectional optical transmission media (M1, M2) of which one (M1) is a wavelength division multiplexed unidirectional transmission medium characterised in that:
- said wavelength division multiplexed unidirectional transmission medium (M1) is connected to said first connection port (R1) and the other unidirectional transmission medium (M2) is connected to said second connection port (R2),
- said third support (S3) supports beam switching means comprising means for splitting or combining beams according to their wavelength,
- said first and second supports (S1, S2) respectively support two send opto-electronic transducer means respectively operating at one of said wavelengths or two receive opto-electronic transducer means respectively operating at one of said wavelengths depending on whether said termination equipment is a send or receive termination equipment for said wavelength division multiplexed unidirectional transmission medium (M1),
- said fourth support (S4) supports send or receive opto-electronic transducer means depending on whether said termination equipment is a send or receive termination equipment for said unidirectional transmission medium (M2) which is not wavelength division multiplexed, and
- said fifth support (S5) does not support any component and enables said fifth and seventh channels to be connected together.

10. Application of a device according to claim 2 to termination equipment of an optical link comprising two unidirectional optical transmission media (M1, M2) of which one (M2) is wavelength division multiplexed characterised in that:
- said unidirectional transmission medium (M1) is connected to said first connection port (R1) and said wavelength division multiplexed transmission medium (M2) is connected to said second connection port (R2),
- said fifth support (S5) supports beam switching means comprising means for splitting or combining beams according to their wavelength,
- said first and fourth supports (S1, S4) respectively support two send or two receive opto-electronic transducer means respectively operating at one of said wavelengths depending on whether said termination equipment is a send or receive termination equipment for said wavelength division multiplexed unidirectional transmission medium (M2),
- said second support (S2) supports receive or send opto-electronic transducer means depending on whether said termination equipment is a receive or send termination equipment for said unidirectional transmission medium (M1) which is not wavelength division multiplexed, and
- said third support (S3) supports beam switching means comprising means for deflecting the beam from said first channel (V1) to said third channel (V3) or vice versa depending on whether said unidirectional transmission medium assigned to receiving is connected to said first connection port (R1) and said unidirectional transmission medium assigned to sending is connected to said second connection port (R2) or vice versa and from said second channel (V2) to said sixth channel (V6) or vice versa depending on whether said unidirectional transmission medium assigned to receiving is connected to said first connection port and said transmission medium assigned to sending is connected to said second connection port or vice versa.
